# EUROPEAN PATENT APPLICATION

(11) **EP 1 235 089 A1**
(43) Date of publication of application: **28.08.2002**
(21) Application number: 02075558.3
(22) Date of filing: 08.02.2002
(51) Int. Cl.: G02B 6/44

(54) **Optical cable for measuring temperature and/or extension**

(30) Priority: 27.02.2001 BE 200100131
(71) Applicant: Voet, Marc, 2440 Geel (BE)
(72) Inventor: Voet, Marc, 2440 Geel (BE)
(74) Representative: Debrabandere, René

(57) **Abstract**

The invention relates to an optical cable for measuring at least one physical parameter, which cable comprises at least one optical fiber (2) which is situated in a tube (1). At different locations, this optical fiber (2) comprises a so-called "Bragg grating", this is, thus, a fiber part where reflecting compartments are formed in the core, and the tube (1) is surrounded by a protective element in the form of a coating with one or more layers (3,4,5), of which at least one comprises a mechanical armouring (6).

## Description

This invention relates to an optical cable for measuring temperature and/or extension, which cable comprises at least one optical fiber which is situated in a tube.

Optical cables for measuring temperature or extension at different distances are known, which cables comprise an optical fiber, in particularly a glass fiber, which is situated in a capillary tube and locally is doped with certain ions and therefore can reflect light with a certain frequency.

Under the influence of the temperature and/or when the optical fiber is subjected to extension, the reflection of the light changes, and by connecting the cable with, on one hand, a light source and, on the other hand, a reflectometer, for example, an OTDR (optical time delay reflectometer), the temperature or extension can be measured in this way.

The measurement which takes place on the basis of the "back scatter" phenomenon requires a relatively expensive reflectometer.

The invention aims at such an optical cable which can be manufactured relatively easily and can be connected to a relatively simple and inexpensive measuring device and which allows for a precise measurement.

According to the invention, this aim is achieved in that the optical fiber, at different locations, has a so-called "Bragg grating", this, thus, is a fiber part where small reflecting compartments are formed in the core, and in that the tube is surrounded by a protective element in the shape of a coating with one or more layers, of which at least one comprises a mechanical armouring.

Such "Bragg grating" or "Bragg grid" is obtained by locally doping the core of the glass fiber with certain metal ions and subsequently radiating it with a multidimensional UV pattern, such that small reflecting planes are formed in the core. Each pattern corresponds to a certain wavelength band whereby spectrally, a part of the light is reflected onto these small planes and a part of the light is passed through (transmissive light).

In order to be able to radiate the doped zones, the coating or the mantle, with which each optical fiber is provided, must be removed locally. After radiating it with said UV pattern, a new cover is provided around the radiated places.

Another possibility consists in radiating the optical fibers already during the drawing process with said UV pattern, still before providing it with a coating or cover.

This spectral shifting can be measured in a simple manner by means of a relatively inexpensive spectrum-analyzing device, a Fabry and Pérot interferometer, an optical discriminator or similar. In principle, the optical fiber can be consulted at both extremities.

In principle, in this manner the temperature and/or the extension can be measured at the location of each Bragg grating, in consideration of the fact that these parameters cause the spectral pattern of the Bragg grating to change.

Due to the protective element, and especially due to the fact that this latter has an armouring, the cable may have a larger length and can be used in various circumstances, for example, on the bottom of the sea.

Similar optical cables are used for telecommunication, however, in these cables the optical fiber is not provided with a Bragg grating.

Such telecommunication cable mostly comprises a bundle of monofilaments of glass or another optical material which each are surrounded by a cover. A number, starting from 2 up to even 124, of these optical fibers is provided in a tube, mostly a steel tube, which further is surrounded by several layers of synthetic materal, one of which is provided with steel armouring wires.

In a similar manner, the optical cable according to the invention may be manufactured as such telecommunication cable, when at least one optical fiber is replaced by an optical fiber with Bragg gratings.

According to the invention, the optical cable thus may comprise several optical fibers in the tube, whereby at least one optical fiber, preferably at least one optical fiber situated in the middle of the cable, comprises Bragg gratings.

If the cable comprises several optical fibers, also several optical fibers situated adjacent to each other may comprise Bragg gratings, whereby then the Bragg gratings in one optical fiber are staggered in the longitudinal direction of the cable, preferably in respect to the Bragg gratings in an adjacent optical fiber.

The cable even may be a telecommunication and a measuring cable at the same time, whereby it then comprises one or more glass fibers which serve for telecommunication and do not comprise any Bragg gratings, and at least one glass fiber which serves for measuring and does comprise Bragg gratings.

The optical fiber or fibers may be freely movable in the tube in their longitudinal direction. In this case, this fiber or these fibers, for example, are embedded in a gel with which the tube is filled.

On account of the fact that the optical fibers are not subjected to extension, this form of embodiment, in the first place, is suitable for measuring temperatures.

In another form of embodiment, at least one optical fiber with Bragg gratings is locally attached, for example, fixed by means of glue, in respect to its surroundings, for example, the tube.

An extension which is locally exerted onto the cable, means a local extension of the optical fiber and therefore can be measured by Bragg gratings.

With the intention of better showing the characteristics of the invention, hereafter, as an example without any limitative character, a preferred form of embodiment of an optical cable according to the invention is described, with reference to the accompanying figures, wherein:
Figure 1 represents a longitudinal cross-section of an optical cable according to the invention;
Figure 2 represents a longitudinal cross-section of the optical cable of figure 1, at a larger scale and with, schematically, the measuring apparatus connected thereto.

As represented in the figures, an optical cable according to the invention substantially consists of a small steel tube 1 in which a number, in the represented example eight, of optical fibers, to wit glass fibers 2, are provided, which tube 1 is surrounded by a mechanical protection element formed by three layers of synthetic material 3, 4 and 5, whereby steel armouring wires 6 are incorporated in the exterior layer 5.

It is obvious that the protective element also may comprise other layers, for example, consisting of metal, such as copper.

At regular interspaces, the glass fibers 2 are provided with a Bragg grating. Per glass fiber, 30 or more Bragg gratings can be provided which form sensors for measuring.

Moreover, the Bragg gratings in the one fiber 2 are longitudinally staggered in respect to the Bragg gratings in the other fibers 2, such that finally a large number of sensors are distributed over the length of the cable.

If, for example, in one glass fiber 2 a Bragg grating is present at each 300 m, with eight of such fibers a measuring sensor can be obtained at approximately each 21,5 m.

At the locations where a Bragg grating has been provided, the coating, with which a glass fiber usually is provided, had to be removed, for example, over a length of approximately 10 mm. After finishing the radiation for the formation of a Bragg grating, the removed coating is replaced by a special coating 7 which possibly is somewhat thicker than the previous, or by a metallic vapour-deposit. As metal has a higher temperature coefficient than glass, the normal sensitivity in respect to the extension of glass hereby can be increased.

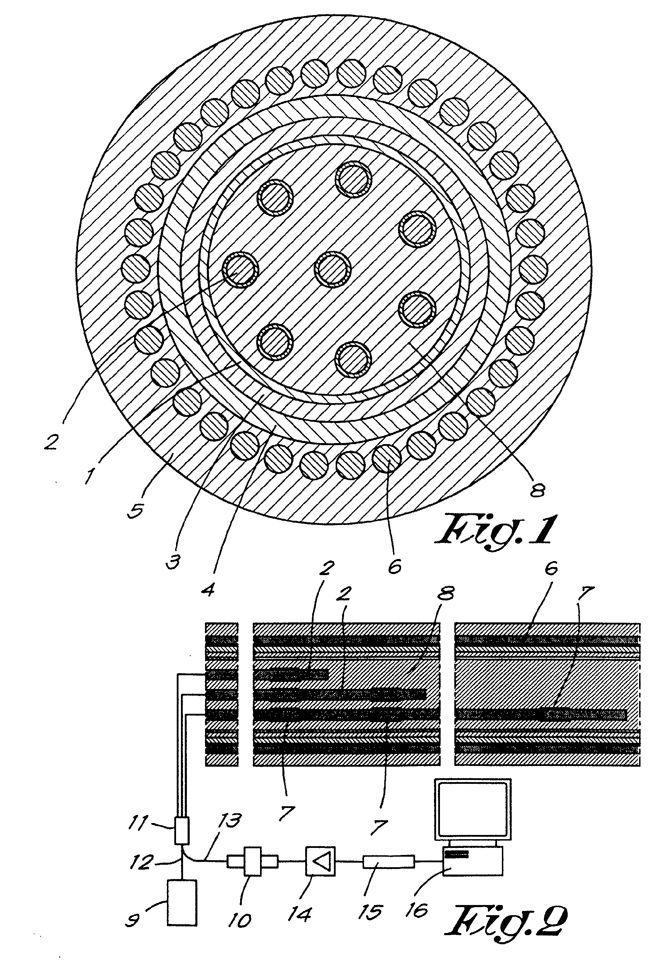

In the form of embodiment represented in figures 1 and 2, the different glass fibers 2 locally, between successive Bragg gratings, are attached to the tube 1, for example, by means of a glue injection, in particular with epoxy glue.

Between these locations where they are fixed, the glass fibers 2 extend through an empty space or through a gel 8, or another moving fluid, which fills the tube 1.

When the cable locally is subjected to extension, as a result thereof also the glass fibes 2 locally are subjected to extension, and the local extension can be measured by a Bragg grating.

For measurement, each of the optical fibers 2 is connected to a wide band light source 9, for example, a doped optical fiber source with a frequency width of 40 nm, and a special examination unit 10, for example, an optical spectrum analyzing apparatus, a Fabry and Pérot interferometer, an optical discriminator or similar.

To this aim, as represented in figure 2, one extremity of the glass fiber 2 is provided with a coupling 11 which, on one hand, is connected to the light source 9 by means of a glass fiber 12 and, by means of a glass fiber 13, is connected to the examination unit 10, which in its turn, via an amplifier 14 and an interface 15, is connected to a computer 16.

When the glass fibers 2 extend over the entire length of the cable, said apparatus can be connected at random to both extremities of the cable.

It is, however, not necessary that the glass fibers 2 extend over the entire length of the cable and, as represented in figure 2, they can end at different distances from an extremity. The measuring apparatus then must be connected to the other extremity.

In another form of embodiment, the glass fibers 2 locally also are fixed to their surroundings, for example, the tube 1, however, at the location of Bragg gratings. The fixation may be performed by the intermediary of the special coating or the metallic vapour-deposit. With a metal coating or cover or a metallic vapour-deposit on the glass fiber 2 at the location of a Bragg grating, use can be made of the fact that metal has a higher temperature coefficient than glass.

In still another form of embodiment, the glass fibers 2 are not fixed locally, but over their entire length, either not embedded, or embedded into a gel 8 or another moving fluid, as a consequence of which each glass fiber 2 can move freely in its longitudinal direction in the tube 1.

The glass fibers 2, and in any case, the middlemost glass fiber 2 which is situated in the middle of the cable, are not subjected to extension.

With such freely movable glass fibers 2, the temperature can be determined.

Of course, certain fibers 2 can be free and others fixed to the surroundings, such that the extension as well as the temperature can be measured at the same time.

By applying certain algorithms, possibly the temperature can be filtered out of the measurement of the extension or, on the opposite, the extension can be filtered out of the measurement of the temperature.

An interesting application of the measuring cable is as a monitoring cable for a pipeline or for a pipe to an offshore drilling platform, whereby the cable can be placed in the pipe. Such, the temperature in the pipe can be measured whereas the extension can be measured, for example, in the part of the pipe extending from the bottom of the sea towards the drilling platform.

In a similar manner, the cable can be manufactured as an optical cable for telecommunication. Only, one or more glass fibers are replaced by glass fibers with Bragg gratings.

The number of glass fibers 2, or other optical fibers, in the tube 1 does not necessarily have to be equal to eight. This number may vary from 1 to, for example, 124.

Moreover, not necessarily all glass fibers 2 in the tube 1 must be provided with Bragg gratings. A number thereof can be free of Bragg gratings and can be used for telecommunication.

In this last case, at least the middlemost glass fiber 2 is provided with Bragg gratings.

The invention is in no way limited to the forms of embodiment described heretofore and represented in the figures; on the contrary, such optical cable for measuring may be realized in different variants, without leaving the scope of the invention.

## Claims

1. Optical cable for measuring the temperature and/or extension, which cable comprises at least one optical fiber (2) which is situated in a tube (1), **characterized in that** the optical fiber (2) comprises a so-called "Bragg grating" at different locations, which thus is a fiber part where small reflecting compartments are formed in the core, and that the tube (1) is surrounded by a protective element in the form of a coating with one or more layers (3,4,5), of which at least one comprises a mechanical armouring (6).

2. Optical cable according to claim 1, **characterized in that** it comprises several optical fibers (2) in the tube (1), whereby at least one optical fiber (2) comprises Bragg gratings.

3. Optical cable according to claim 2, **characterized in that** at least one optical fiber (2) situated in the middle of the cable comprises Bragg gratings.

4. Optical cable according to claim 2 or 3, **characterized in that** it comprises several optical fibers (2) and that also several optical fibers (2) comprise Bragg gratings.

5. Optical cable according to claim 4, **characterized in that** the Bragg gratings in the one optical fiber (2) are staggered in respect to the Bragg gratings in an adjacent optical fiber (2), in the longitudinal direction of the cable.

6. Optical cable according to any of the claims 2 to 5, **characterized in that** it is a telecommuncation cable and a measuring cable at the same time and comprises one or more glass fibers (2) which serve for telecommunication and do not comprise any Bragg gratings, and at least one glass fiber (2) which serves for measuring and does comprise Bragg gratings.

7. Optical cable according to any of the preceding claims, **characterized in that** at least one optical fiber (2) with Bragg gratings is freely movable in the tube (1) in its longitudinal direction.

8. Optical cable according to any of the preceding claims, **characterized in that** the optical fiber (2) which is free, is embedded into a movable fluid, for example, a gel (8) with which the tube (1) is filled.

9. Optical cable according to any of the claims 1 to 6, **characterized in that** at least one optical fiber (2) with Bragg gratings, is locally attached in respect to its surroundings, for example, to the tube (1).

10. Optical cable according to claim 9, **characterized in that** the optical cable (2), at the locations where it is attached, is fixed by means of glue, for example, at the tube (1).

11. Optical cable according to claim 9 or 10, **characterized in that** the optical fiber (2), between the locations where it is attached, extends through a movable fluid, for example, a gel (8).

12. Optical cable according to any of the claims 9 to 11, **characterized in that** the optical fiber (2) is fixed between successive Bragg gratings.

13. Optical cable according to any of the claims 9 to 11, **characterized in that** the optical fiber (2) is fixed at the location of Bragg gratings.

14. Optical cable according to any of the preceding claims, **characterized in that** the optical fiber (2) comprising Bragg gratings, is provided, at the location of these Bragg gratings, with a special coating (7) or a metallic vapour-deposit.

15. Optical cable according to claims 13 and 14, **characterized in that** the optical fiber (2) is fixed by the intermediary of the special coating (7) which preferably consists of metal, or by the intermediary of the metallic vapour-deposit.
